# EUROPEAN PATENT APPLICATION

(11) **EP 2 302 504 A2**
(43) Date of publication of application: **30.03.2011**
(21) Application number: 10175131.1
(22) Date of filing: 02.09.2010
(51) Int. Cl.: G06F 3/12

(54) **Method for printing document of mobile terminal through printer, and mobile terminal therefor**

(30) Priority: 15.09.2009 KR 20090087112
(71) Applicant: Samsung Electronics Co., Ltd, Suwon-si, Gyeonggi-do 442-742 (KR)
(72) Inventor: Kim, Jin-Hyoung, Gyeonggi-do (KR); Lee, Jin-Wook, Gyeonggi-do (KR); Lim, Hun, Gyeonggi-do (KR); Ryu, Je-Hyok, Gyeonggi-do (KR); Park, Woo-Jin, Gyeonggi-do (KR); Kang, Shin-Il, Gyeonggi-do (KR); Lee, Gene-Moo, Gyeonggi-do (KR)
(74) Representative: Jenkins, Richard Gavin

(57) **Abstract**

A method for printing a document of a mobile terminal without a separate printer setup is provided. The method includes performing a wireless auto-connection between a mobile terminal and a printer located near the mobile terminal, and when the mobile terminal transmits a document to be printed to the printer, the printer finds a computer capable of outputting the document, transmits the document to the computer, and prints the document in response to a print instruction received from the computer. Accordingly, a user can print various documents stored in the mobile terminal wherever a printer is located, even without information of the printer.

## Description

### BACKGROUND OF THE INVENTION

### 1. Field of the Invention

The present invention relates generally to an apparatus and method for printing a document of a mobile terminal, and more particularly to an apparatus and method for enabling a user to print the document through a printer, via wireless communication of the mobile terminal, and without requiring a separate printer setup procedure.

### 2. Description of the Related Art

Generally, in order for a desktop personal computer (hereinafter, referred to as a computer) to print a document via a printer, a document file, application software capable of reading the document, and driver software suitable for the particular printer model and the operating system are requested. Therefore, when the user issues a document output request, a computer reads and analyzes a document file through application software and generates, through a Graphical Device Interface (GDI) a document image that has a form suitable for a printer to which the document image is to be output. After reading and analyzing the document, the computer transmits data of the document image to the printer through a printer driver, thereby printing the document.

Unlike desktop personal computer environments such as described above, a mobile terminal such as a cellular phone cannot use the same application software as that used in the computer. Since mobile terminals are designed to be carried by users, the performance of mobile terminals is lower than the performance of desktop personal computers, and mobile terminal operating systems are different from desktop computer operating systems in most cases. More specifically, mobile terminals are more limited than desktop personal computers, with respect to implementing application software. Therefore, such mobile environments, dedicated viewer software capable of only viewing documents is used to check various documents.

In order to output a document stored in a mobile terminal, the mobile terminal connects to a computer. To this end, indirect and direct connection schemes are used. The indirect connection scheme includes directly inserting an external storage device into the mobile terminal, copying a desired document into the external storage device, bringing the copied document of the external storage device into the computer, and then outputting the copied document. The direct connection scheme includes outputting the document using a separate data cable or a wireless local area connection scheme. However, using an external storage device or a data cable is inconvenient for a user because the user must perform a connection task, and using a wireless local area connection scheme requires the user to be aware of the way of using software for wireless connection.

As described above, a conventional mobile terminal uses dedicated viewer software in order to read a computer document. However, when using dedicated viewer software, since the number of formats for documents has already been determined, a user of the mobile terminal cannot view a corresponding document if the mobile terminal does not have the same viewer software for supporting a document format of document software, as that in the computer. Document formats may frequently change due to version upgrades according to enhancement of functions of document software. Therefore, if dedicated viewer software is not rapidly updated, the dedicated viewer software may not be used with updated document formats. Although dedicated viewer software is used to address the above-described absence of mobile versions of document-related software, such dedicated viewer software cannot support all document formats used by computers. It is also necessary to install a printer driver in order to print a document. However, since mobile terminals have no fixed printer for usage, unlike computers, a mobile terminal must find and install a suitable printer driver every time a document is to be printed. Even in the above-described method of connecting a mobile terminal and a computer, a user passes through a setup procedure of inputting, step-by-step, information for a wireless communication connection in order to establish a wireless local area communication, which is inconvenient. It is inefficient for a user to input pieces of information items, one-by-one, which is very inconvenient for users who must frequently change setup due to frequent movement.

Therefore, a need exists for a method for enabling a mobile terminal to simply establish a wireless connection with a printer when the mobile terminal is located near the printer, and to print a desired document, even without installing a printer driver for document printing.

### SUMMARY OF THE INVENTION

Accordingly, the present invention has been made to solve at least the above-mentioned problems occurring in the prior art, and the present invention provides an apparatus and method for printing documents of a mobile terminal, even without application software corresponding to each document and a separate printer setup procedure, such as installing a printer driver or other similar procedures.

In addition, the present invention provides an apparatus and method for enabling the user to easily connect a mobile terminal to a printer using a wireless communication function of the mobile terminal, and to print documents of the mobile terminal using the printer.

In accordance with an aspect of the present invention, there is provided a method for printing, by a printer, a document of a mobile terminal, the printer being connected with at least one computer. The method includes acquiring document support information from at least one computer connected with the printer; performing a wireless auto-connection procedure with the mobile terminal; receiving a print request including an output target document from the connected mobile terminal; selecting a computer to output the output target document by referring to the acquired document support information when receiving the print request; and printing the output target document in response to a print instruction issued by the selected computer.

In accordance with another aspect of the present invention, there is provided a mobile terminal for outputting a document of the mobile terminal through a printer connected with at least one computer. The mobile terminal includes a wireless auto-setup module for performing a wireless auto-connection procedure with the printer, wherein the printer manages document information in which a computer available for output according to each document type is mapped; a discovery module for performing a discovery operation with the connected printer; a Graphical User Interface (GUI) for providing a print menu, the print menu being used for selecting a target document to be output and selecting a print option; and a printing agent module for, when the output target document and print option are appointed through the print menu, transmitting a print request including the output target document to the printer for enabling the printer to select a target computer by referring to the document information.

### BRIEF DESCRIPTION OF THE DRAWINGS

The above and other aspects, features and advantages of the present invention will be more apparent from the following detailed description taken in conjunction with the accompanying drawings, in which:
FIG. 1 is a block diagram illustrating a system for network printing according to an embodiment of the present invention;
FIG. 2 is a flowchart illustrating a printing procedure according to an embodiment of the present invention;
FIG. 3 is an operational flowchart further illustrating a discovery and printable document registration procedure illustrated in FIG. 2, according to an embodiment of the present invention;
FIGs. 4 and 5 are operational flowcharts further illustrating a wireless auto-connection procedure illustrated in FIG. 2 according to an embodiment of the present invention; and
FIG. 6 is an operational flowchart further illustrating a discovery and document output procedure between a mobile terminal and a printer illustrated in FIG. 2, according to an embodiment of the present invention.

### DETAILED DESCRIPTION OF EMBODIMENTS

Hereinafter, various embodiments of the present invention are described with reference to the accompanying drawings. In the following description, the same elements are designated by the same reference numerals although they are shown in different drawings. In addition, in the following description of the present invention, a detailed description of known functions and configurations incorporated herein are omitted where a detailed description thereof may make the subject matter of the present invention unclear.

The present invention provides a method for printing a document of a mobile terminal, even without a separate printer setup procedure. To this end, an embodiment of the present invention includes performing a wireless auto-connection between a mobile terminal and a printer located near the mobile terminal, and when the mobile terminal transmits a document to be printed to the printer, allowing the printer to find a computer capable of outputting the document and to transmit the document to the computer. Thereafter the printer prints the document in response to a print instruction received from the computer. Accordingly, the user can print various documents stored in the mobile terminal wherever a printer is located, even without information of the printer.

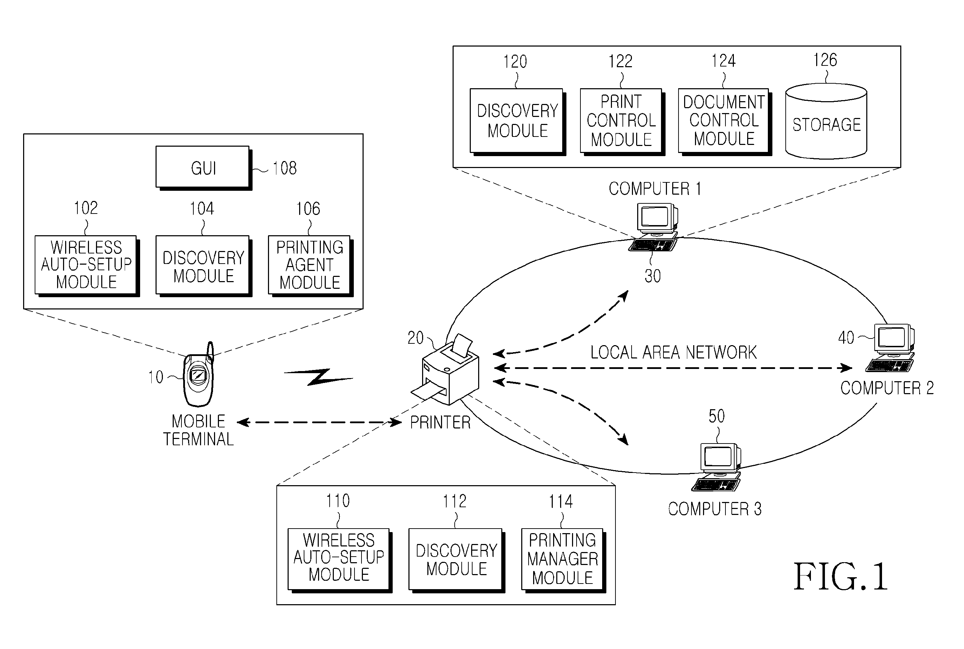

FIG. 1 is a block diagram illustrating a system for network printing according to an embodiment of the present invention. As illustrated in FIG. 1, a system for printing a document of a mobile terminal includes a mobile terminal 10, a printer 20 for printing documents, and at least one computer 30, 40, and 50 connected with the printer 20 by a local area network (LAN).

The mobile terminal 10, which may be a cellular phone or another similar device, performs a wireless connection operation with the adjacent printer 20 using a wireless local area communication scheme, and transmits a document to be printed to the printer 20 while sending a print request when the mobile terminal 10 is connected with the printer 20. The mobile terminal 10 includes a wireless auto-setup module 102, a discovery module 104, a printing agent module 106, and a Graphical User Interface (GUI) 108.

The wireless auto-setup module 102 functions configure a wireless auto-connection between the mobile terminal 10 and the printer 20.

The discovery module 104 finds a printer located near the mobile terminal 10. The discovery module 104 multicasts a printer discovery request, and then obtains a name, an Internet Protocol (IP) address, port information, etc. of a printer targeted for connection from a response to the discovery request when receiving the response. In the present example, the mobile terminal 10 obtains information form the printer 20. The information of the printer 20, obtained as described above, is used to transmit a document to be printed to the printer 20.

The printing agent module 106 communicates with a printing manager module 114 of the printer 20, and transmits/receives and manages various state information of the printer 20. More specifically, the printing agent module 106 manages state information of the wirelessly-connected printer 20, such as an online state, an offline state, a power on/off state, a paper feed state, etc. The printing agent module 106 also issues a document print request to the printer 20, and checks whether a document to be printed can be printed by inquiring the printer 20 for information about whether the printer 20 can print the document and receiving a response to the inquiry. The printing agent module 106 requests and acquires information on various attributes, e.g., the number of copies, a paper type, a page, color / black & white, etc., that are used in printing. The printing agent module 106 transmits acquired attribute information to the GUI 108. When print option information and a print target document is selected by the user through the GUI 108, the printing agent module 106 transmits the print option information together with the print target document to the printer 20.

Based on attribute information received from the printing agent module 106, the GUI 108 provides a user with information on the state of a wirelessly-connected printer, a selected number of copies, a selected paper, whether the printer can print a document, and other configurable print options. The user can also select a print-target document through the GUI 108.

The printer 20 includes a wireless auto-setup module 110, a discovery module 112, and the printing manager module 114.

The wireless auto-setup module 110 configures a wireless auto-connection with the mobile terminal 10, similarly to the wireless auto-setup module 102 of the mobile terminal 10. Such a wireless auto-connection procedure will be described in detail hereinbelow.

Similarly to the discovery module 104 of the mobile terminal 10, the discovery module 112 provides a response including information on its own name, IP address, port, etc., upon receiving the discovery request from the mobile terminal 10.

The printing manager module 114 manages target computers 30, 40, and 50 capable of outputting documents through the current printer 20 in the form of a table by mapping the computers 30, 40, and 50 according to types of documents. Such a table may have a structure as illustrated in Table 1 below, but the present invention is not limited thereto.

**Table 1**

| No. | Type of document | Target computer address | Software version | Output available/ unavailable | Allocated area (Free) |
|---|---|---|---|---|---|
| 1 | doc | 192.168.0.10 | 7.0 | Output available | 115 GB |
| 2 | doc | 192.168.0.15 | 5.0 | Output unavailable | 50 MB |
| 3 | xls | 192.168.0.110 | 7.0 | Output available | 663 MB |
| 4 | ppt | 192.168.0.10 | 7.0 | Output available | 115 GB |
| 5 | gul | 192.168.0.20 | 12 | Output available | 800 MB |
| . | . | . | . | . | |
| . | . | . | . | . | |

As shown in Table 1, contents of the table include document support information, such as a type of each document (i.e., a file extension), a network address of each computer connected with the printer 20 in a local area network, a version of each document software installed in each computer, information regarding whether document output is available, and information regarding a document storage area allocated to each computer, etc.

The printing manager module 114 also receives a document requested for printing by the user, from the printing agent module 106 of the mobile terminal 10, finds a computer capable of outputting the received document by referring to a table such as Table 1, and then transmitting the received document to the found computer.

As described above, a printer auto-connected with a mobile terminal prints a document to be printed through a computer corresponding to the document among computers connected with the printer by a network, so that the mobile terminal can print a desired document, without installing a printer driver and application software corresponding to each document.

The first computer 30 includes a discovery module 120, a print control module 122, a document control module 124, and a storage 126. The following description of the configuration of the first computer 30 is provided as an example; the configuration and operation of the second and third computers 40 and 50 are the same as those of the first computer 30.

The discovery module 120 performs a discovery operation of the first computer 30 to find the printer 20. The discovery module 120 also registers information regarding types of documents that the first computer 30 can output, a network address, an area allocated to accommodate documents, etc., which are collected by the document control module 124 of the first computer 30 that is a local computer, with the printing manager module 114 of the printer 20.

The document control module 124 searches for document software installed in the first computer 30, and manages types of documents that can be output by the first computer 30. In the present example, information managed by the document control module 124 includes a type of each document (i.e., a file extension), a name of each software, a version of each software, an installation position of each software, etc. Such management information may have a table structure as illustrated in Table 2 below, but the present invention is not limited thereto.

**Table 2**

| No. | Type of document | Name | Version | Position of software |
|---|---|---|---|---|
| 1 | doc | MS Word | 7.0 | C:\Program Files\Word.exe |
| 2 | xls | MS Excel | 7.0 | C:\Program Files\Excel.exe |
| 3 | ppt | MS PowerPoint | 7.0 | C:\Program |
| | | | | Files\Powerpoint.exe |
| 4 | gul | HunMinJeongEum | 12 | C:\Program Files\Hun.exe |
| 5 | hwp | Hangul2007 | 2007 | C:\Program Files\Hwp.exe |
| . | . | . | . | . |

The document control module 124 also receives an output target document and an output option set by the user from the printing manager module 114 of the printer 20, and stores the received output target document and output option in the storage 126. In addition, the document control module 124 performs document security-related operations, such as deletion, copy protection, modulation protection, etc., or a document

The print control module 122 applies the received output option through an output function of document software, and controls the printer 20 to print the document.

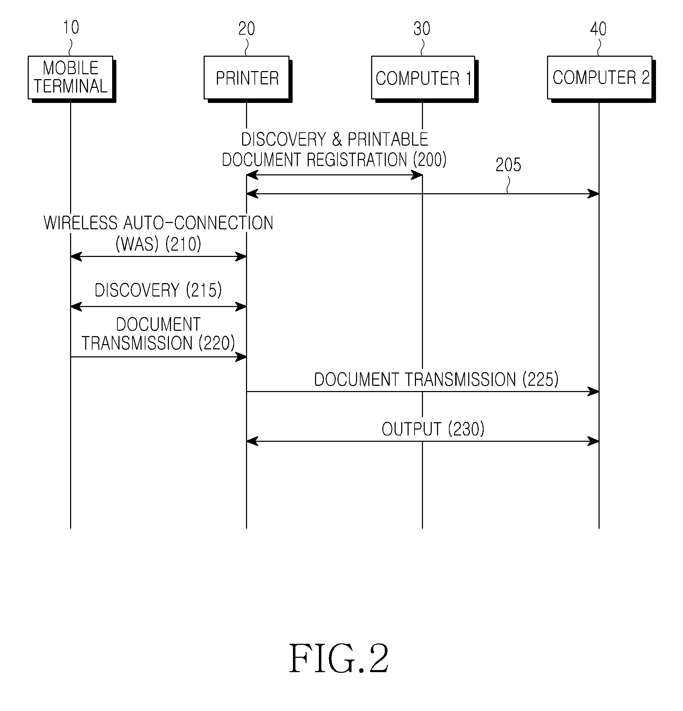

FIG. 2 is a diagram schematically illustrating a printing procedure according to an embodiment of the present invention. More specifically, FIG. 2 illustrates a procedure in which, when the mobile terminal 10 wirelessly auto-connects with the printer 20 and transmits a document to be printed to the printer 20, the printer 20 finds a computer corresponding to the document and requests the found computer to print the document.

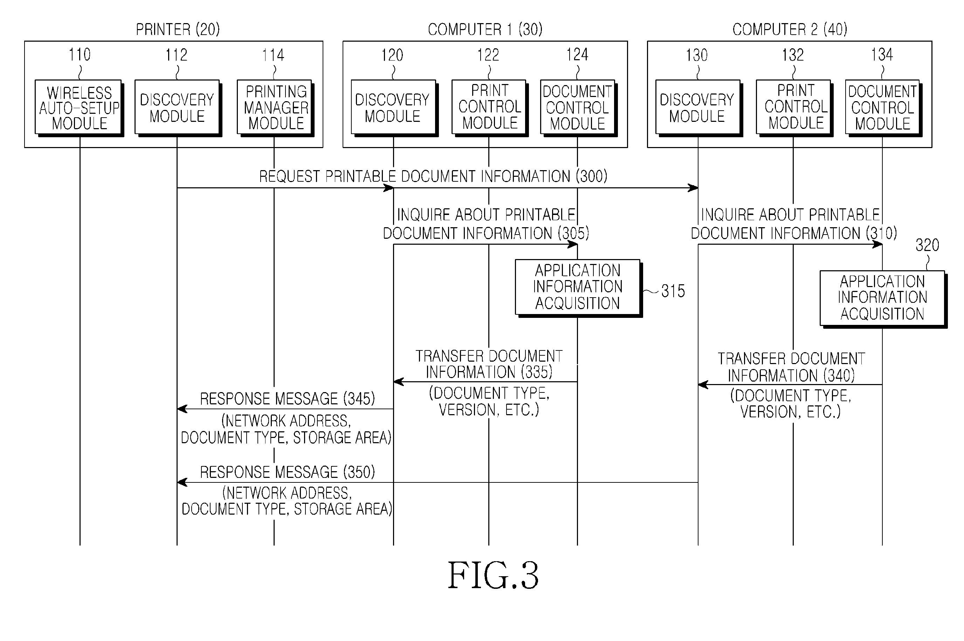

Referring to FIG. 2, when the printer 20 is powered on, the printer 20 performs a discovery operation of searching for one or more computers 30 and 40 connected by a LAN using a predetermined discovery protocol, identifies documents that can be output from the searched computers 30 and 40, and registers documents that can be output from each computer 30 and 40 in steps 200 and 205. The procedure of performing a discovery operation between the printer and the computer and registering documents that can be output in steps 200 and 205 is described detail hereinbelow with reference to FIG. 3.

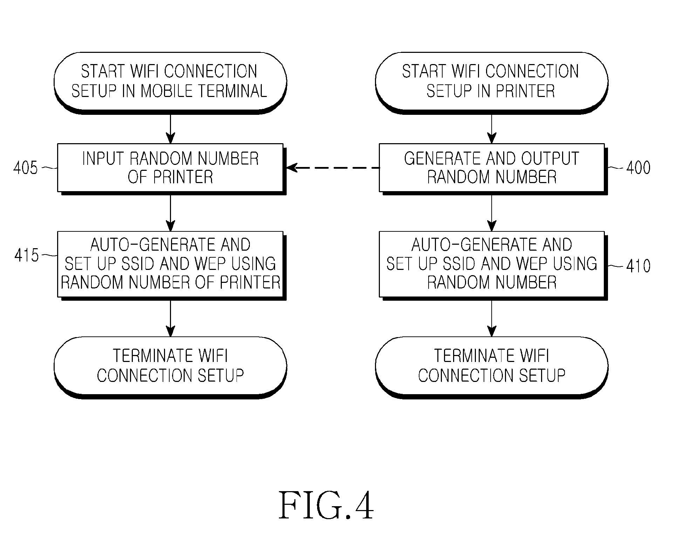

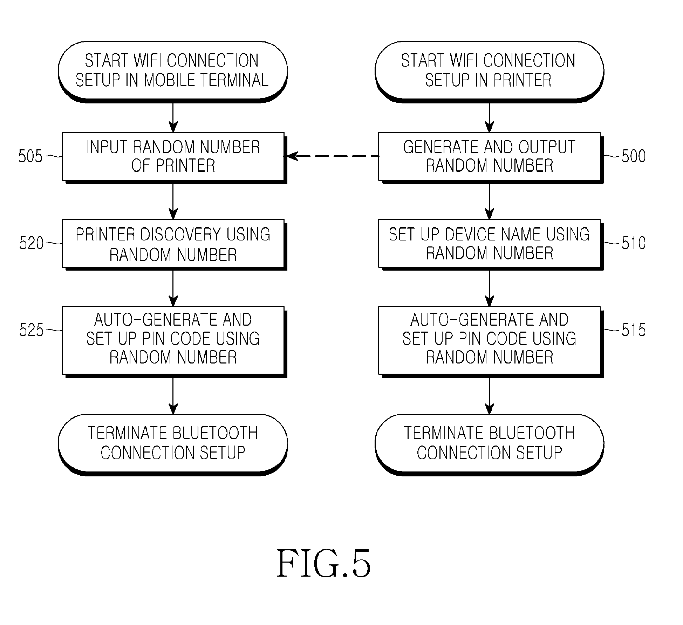

In step 210, a wireless auto-connection procedure is performed between the mobile terminal 10 and the printer 20. According to an embodiment of the present invention, a method for easily achieving a wireless connection is provided for improving convenience for a user. Such a wireless auto-connection procedure is described hereinbelow with reference to FIGs. 4 and 5. FIGs. 4 and 5 are flow diagrams explaining a wireless auto-connection procedure in FIG. 2 according to an embodiment of the present invention.

When the mobile terminal 10 and the printer 20 have been connected with each other through step 210, a discovery operation is performed in step 215. Through the discover operation, the mobile terminal 10 can obtain attribute information of the printer 20, and can report a state of the printer 20 based on the obtained attribute information. When the user of the mobile terminal 10 has selected a print option and a document to be printed, the mobile terminal 10 transmits the document to be printed to the printer 20 in step 220. In the present example, a print option selected by the user is transmitted, together with the document, and the printer 20 finds a computer capable of outputting the document by referring to a table such as Table 1. If the printer 20 has found the second computer 40 as a computer corresponding to the document (i.e., capable of outputting the document), the printer 20 transmits the document to the second computer 40 in step 225. The second computer 40 transmits an output instruction to the printer 20 in step 230, so that the printer 20 prints the document.

As described above, according to an embodiment of the present invention, the printer 20 directly finds a target computer suitable for document output among computers connected with the printer 20 by a LAN, and requests the found computer to output a document. Accordingly, the mobile terminal 10 is not required to install a separate printer driver to use the printer 20, and can print various types of documents stored in the mobile terminal 10 because a print request is sent to a computer having application software corresponding to a document to be printed, among computers connected with the printer 20 by a LAN.

In order to print various types of documents, as described above, the printer 20 should be aware of information regarding documents supported by each computer 30, 40, and 50. For this reason, according to an embodiment of the present invention, a procedure of performing a discovery operation between a printer and a computer and registering documents that can be output is provided, as described in steps 200 and 205. Such a procedure is described as follows with reference to FIG. 3, wherein an operation performed between the printer 20 and the first and second computers 30 and 40 is explained as an example.

In step 300, the discovery module 112 of the printer 20 multicasts a request signal for requesting each computer 30 and 40 to provide information regarding documents that can be output by the first and second computers 30 or 40, to the computers 30 and 40 connected by a LAN using a discovery protocol. The printer 20 transmits such a request in order to identify document output support information for each of the first and second computers 30 and 40. The request is transmitted to the discovery modules 120 and 130 of the first and second computers 30 and 40, respectively. Each discovery module 120 and 130 inquires each document control module 124 and 134, respectively, about a list of printable documents in steps 305 and 310, so that each of document control modules 124 and 134 acquires application information in steps 315 and 320, respectively. The application information represents document information, including types of documents supported by each computer, the version of document software installed in each computer, whether output is available or unavailable, and a document allocation area that can be accommodated. Thereafter, when each document control module 124 and 134 transmits the document information to each discovery module 120 and 130 in steps 335 and 340, each discovery module 120 and 130 generates and transmits a response message including the document information to the printer 20 in steps 345 and 350. In the present example, the response message includes a network address, in addition to the document information.

As described above, each computer 30 and 40 provides the printer 20 with document support information, including types and versions of documents supported by the computer, a document allocation area that can be accommodated, whether output is available or unavailable, a network address, etc., using a discovery protocol, in advance in response to a printable document information request. If a third computer 50 is powered on after the discovery operation has been completed, the discovery module of the third computer 50 may directly register information regarding documents supported by the third computer 50 with a previously registered printer 20.

When the printer 20 receives response messages including each piece of document information from each of first and second computers 30 and 40 through the aforementioned steps, the printer 20 generates a table such as Table 1 based on each piece of received document information. The table is used to find a computer that can output a document received from the mobile terminal 10.

According to an embodiment of the present invention, a method for enabling the user to easily connect the mobile terminal 10 and the printer 20 using a Wireless Auto Setup procedure, i.e. a wireless auto-connection setup procedure is provided. Such a wireless auto-connection procedure corresponding to step 210 in FIG. 2 is described in detail as follows with reference to FIGs. 4 and 5.

FIG. 4 is a diagram illustrating a wireless auto-connection procedure using a Wireless Fidelity (WiFi) scheme among wireless local area communication schemes, wherein a Service Set IDentifier (SSID) is required for WiFi communication between the mobile terminal 10 and the printer 20, a security key is required for authentication and encryption, an IP address must be set for IP communication, and a Wired Equivalent Privacy (WEP) key value is required, since authentication and encryption are performed in a WEP scheme. According to an embodiment of the present invention, a scheme of automatically generating and setting up all the information required for wireless connection is used. Specifically, an SSID, a security key, an IP address are automatically generated using the same information inputted by a user between the mobile terminal 10 and the printer 20. According to alternative embodiments of the present invention, random information may be used instead of the same information. In this case, the random information may be a random number that is randomly generated in the mobile terminal 10 and the printer 20. Through this procedure, it is possible to conveniently and automatically connect the mobile terminal 10 to the printer 20 without requiring a user to input each piece of information for wireless LAN connection every time. Due to the characteristics of random information that changes for every connection attempt, it is possible to obtain a more enhanced security characteristic.

Referring to FIG. 4, the mobile terminal 10 and the printer 20 execute the same wireless connection software, in which a WiFi connection setup begins in the mobile terminal 10 and the printer 20, respectively, according to a user input. When initiation of such a wireless LAN auto-connection procedure is requested, the printer 20 generates and displays random information that is used in common with the mobile terminal 10, on a display unit of the printer 20 for the wireless auto-connection, in step 400. The mobile terminal 10 displays a random number on the display unit of the printer 20, and receives user input of the random number of the printer 20 in step 405. Such a random number is used to generate and set up information required for a wireless auto-connection. Specifically, as shown in steps 410 and 415, an SSID, a WEP, etc. is automatically generated and set up with the respective random numbers using the same hash function, thereby completing a WiFi connection.

FIG. 5 is a diagram illustrating a wireless auto-connection procedure using a BLUETOOTH® (BT) scheme among wireless local area communication schemes, wherein each of the mobile terminal 10 and printer 20 generates a device name and a Personal Identification Number (PIN) code with a random number, such as in FIG. 4, using the same hash function. When a Bluetooth connection setup begins in the mobile terminal 10 and the printer 20, the printer 20 generates and outputs a random number in step 500, and then the user sees and inputs the random number through the mobile terminal 10 in step 505. Then, the printer 20 performs a device name setup procedure and a PIN code auto-generation/setup procedure using the random number in steps 510 and 515, respectively, while the mobile terminal 10 performs a printer discovery operation and a PIN code auto-generation/setup procedure using the random number in steps 520 and 525, respectively. Accordingly, the user is only required to input a random number in order to automatically achieve a wireless connection between the mobile terminal 10 and the printer 20.

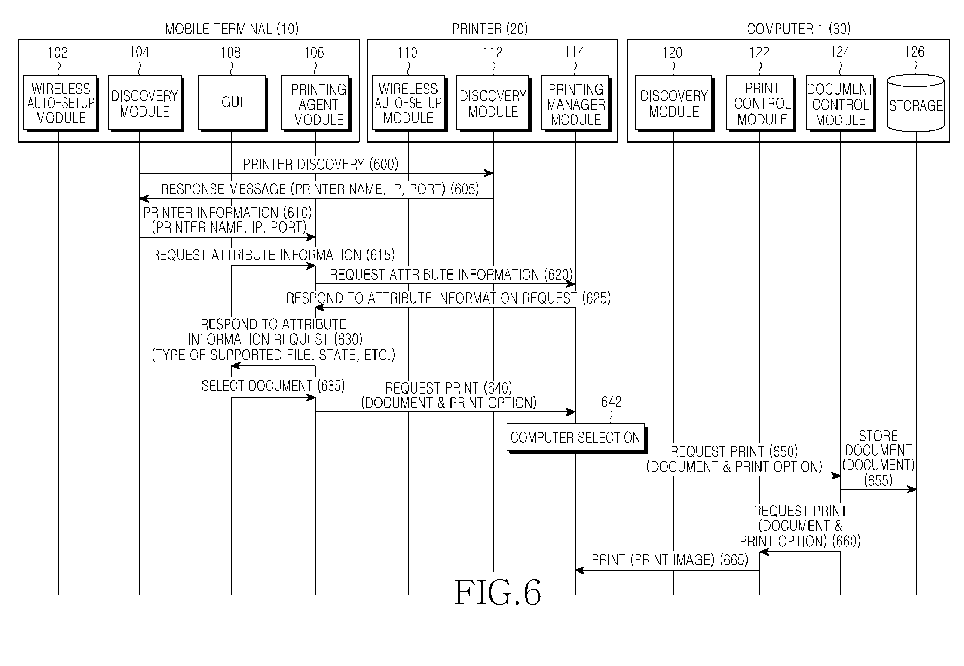

Hereinafter, a discovery and document output procedure between the mobile terminal and the printer, which corresponds to steps 215 to 230 in FIG. 2, is described in detail as follows with reference to FIG. 6.

Referring to FIG. 6, a user may begin a network printing function through a "print" menu provided by the GUI 108. When such a beginning request is input to the mobile terminal 10, the discovery module 104 of the mobile terminal 10 executes a discovery protocol in step 600, thereby requesting a printer discovery from the discovery module 112 of the printer 20. For such a request, the discovery module 104 of the mobile terminal 10 multicasts a DISCOVERY_PRINTER message. Upon receiving such a DISCOVERY_PRINTER message, the printer 20 transmits a RESPONSE_PRINTER message, which is a response message including printer information, such as its own printer name, IP address, port information, etc., to the discovery module 104 of the mobile terminal 10 in step 605. The discovery module 104 transmits the printer information, which has been acquired through such a discovery procedure, to the printing agent module 106 in step 610.

The GUI 108 transmits a PRINTING_CAPABILITY_REQUEST message for requesting attribute information of the printer 20 from the printing agent module 106 in step 615. Such an attribute information request is used to prepare a "print" menu, which enables the user to check the state of a printer, and then to configure a desired option.

Accordingly, the printing agent module 106 transmits the PRINTING_CAPABILITY_REQUEST message to the printing manager module 114 of the printer 20 in step 620 in order to request attribute information. The printing manager module 114 responds by transmitting a PRINTING_CAPABILITY_RESPONSE message corresponding to the attribute information request in step 625. Such a response message includes attribute information requested by the mobile terminal 10. Here, the attribute information represents various information related to printing, and includes types of printable documents, the state of the printer 20, and information on various options which can be set.

Upon receiving the PRINTING_CAPABILITY_RESPONSE message, the printing agent module 106 transfers the PRINTING_CAPABILITY_RESPONSE message to the GUI 108, in step 630. The GUI 108 provides a "print" menu based on received attribute information. Such a "print" menu includes various option functions, including state information of the printer, types of printable documents, color / black & white setup options, horizontal/vertical setup options, etc. When a print target document and various print options have been appointed through the use of the "print" menu, the GUI 108 transmits the print target document to the printing agent module 106 using a SELECT_DOCUMENT message in step 635. The printing agent module 106 combines and transmits the document and the appointed print options through the use of a PRINT_REQUEST message in step 640.

Through such a PRINT_REQUEST message, the print target document, which has been combined together with the appointed print options, is transmitted to the printing manager module 114 of the printer 20. The printing manager module 114 selects a computer capable of outputting the document by referring to a table such as Table 1 in step 642. More specifically, the printer 20 compares a type of a received document, a capacity of the received document, a right of use, etc. with corresponding information in a document-computer mapping table such as Table 1, and selects a computer capable of outputting the received document. When the printer 20 selects the first computer 30, the printing manager module 114 transmits a PRINT_REQUEST message to the document control module 124 of the first computer 30 in step 650, thereby transmitting the document and print options to the document control module 124.

Upon receiving the PRINT_REQUEST message, the document control module 124 stores the document in a local storage area of the storage 126 in step 655, and then notifies the print control module 122 of the position of the stored document and the print options through the use of the PRINT_REQUEST message, in step 660. The print control module 122 executes an application corresponding to the document or an output API of the application by applying the application or output API to print options, by making reference to a document-application table such as Table 2, so that the printing manager module 114 of the printer 20 can print the document. Accordingly, the print control module 122 transmits a PRINT message including a print image to the printing manager module 114 in step 665, so that actual printing is executed through a printer driver.

According to an embodiment of the present invention, a user can print various documents stored in a mobile terminal wherever a printer is located. In addition, the user can print a document of the mobile terminal without information of the printer, and can immediately obtain a printed document, because a document print instruction is issued in a state where the mobile terminal is located near the printer. Accordingly, it is not necessary for the user to find a document application and to install a printer driver suitable for a corresponding printer every time a document is printed, so that the convenience of the user is enhanced. In addition, according to an embodiment of the present invention, a method for simply achieving a wireless connection between a mobile terminal and a printer is provided, so that the user can easily connect the mobile terminal and the printer.

While the present invention has been shown and described with reference to certain embodiments thereof, it will be understood by those skilled in the art that various changes in form and details may be made therein without departing from the spirit and scope of the invention as defined by the appended claims. Accordingly, the scope of the invention is not to be limited by the above embodiments but by the claims and the equivalents thereof.

## Claims

1. A method for printing, by a printer connected to at least one computer, a document of a mobile terminal, the method comprising the steps of:
acquiring document support information from at least one computer connected with the printer;
performing a wireless auto-connection procedure with the mobile terminal;
receiving a print request including an output target document from the connected mobile terminal;
upon receiving the print request, selecting a computer to output the output target document by referring to the acquired document support information; and
printing the output target document in response to a print instruction issued by the selected computer.

2. The method as claimed in claim 1, further comprising, when acquiring the document support information from the at least one computer, mapping the at least one computer according to types of documents and storing a result of the mapping in a table.

3. The method as claimed in claim 2 or 3, wherein the document support information includes at least one selected from a group consisting of a document type, a network address of the computer, a version of document software installed in the computer, information indicating whether output of the document is available, and a document storage area allocated to the computer.

4. The method as claimed in any preceding claims, wherein performing the wireless auto-connection procedure with the mobile terminal comprises:
when a request for starting an automatic wireless Local Area Network (LAN) connection procedure is issued, generating and displaying random information used in common with the mobile terminal for the wireless auto-connection; and
generating and configuring information required for the wireless auto-connection using the random information.

5. The method as claimed in any preceding claims, further comprising a step of, when the printer is powered on before the document support information is acquired, multicasting a request for the document support information to the at least one computer connected on a Local Area Network (LAN) according to a discovery protocol.

6. The method as claimed in any preceding claims, further comprising, after performing the wireless auto-connection procedure:
receiving a printer information request according to a discovery protocol from the mobile terminal; and
providing the mobile terminal with a response message, the response message including a name of the printer, an Internet Protocol (IP) address of the printer, and port information of the printer.

7. The method as claimed in claim 6, further comprising:
receiving, from the mobile terminal, a request for attribute information of the printer; and
transmitting a response to the request, wherein the response includes the attribute information of the printer.

8. The method as claimed in claim 6, wherein the printer attribute information corresponds to information required for constructing a print menu in the mobile terminal, and includes at least one selected from a group consisting of state information of the printer, a type of a document that can be output, and an output-related option.

9. A mobile terminal for outputting a document of the mobile terminal through a printer connected with at least one computer, the mobile terminal comprising:
a wireless auto-setup module for performing a wireless auto-connection procedure with the printer, wherein the printer manages document information in which a computer available for output according to each document type is mapped;
a discovery module for performing a discovery operation with the connected printer;
a Graphical User Interface (GUI) for providing a print menu, the print menu being used for selecting a target document to be output and selecting a print option; and
a printing agent module for, when the output target document and print option are appointed through the print menu, transmitting a print request including the output target document to the printer for enabling the printer can select a target computer by referring to the document information.

10. The mobile terminal as claimed in claim 9, wherein the discovery module acquires printer information, including a name of the printer, an Internet Protocol (IP) address of the printer, and port information of the printer, by a discovery protocol, and
wherein the discovery module transmits the acquired printer information to the printing agent module.

11. The mobile terminal as claimed in claim 10, wherein, after acquiring the printer information, the printing agent module requests the printer to send attribute information of the printer, receives a response comprising attribute information of the printer according to the request, and transfers the response to the GUI.

12. The mobile terminal as claimed in claim 11, wherein, the GUI constructs the print menu based on the received printer attribute information, the print menu comprising at least one print option selected from the group consisting of state information of the printer, a type of a document which can be output, color / black & white setup, and horizontal/vertical setup.

13. The mobile terminal as claimed in claim 9, wherein when a request for starting an automatic wireless LAN connection procedure is issued, the wireless auto-setup module acquires random information used in common with the printer for the wireless auto-connection, and generates and configures information required for the wireless auto-connection using the random information.
